# EUROPEAN PATENT SPECIFICATION

(11) **EP 3 217 243 B1**
(45) Date of publication and mention of the grant of the patent: **12.02.2020**
(21) Application number: 17160167.7
(22) Date of filing: 09.03.2017
(51) Int. Cl.: G05B 23/02

(54) **PHYSICAL COMPONENT FAULT DIAGNOSTICS**
FEHLERDIAGNOSE FÜR PHYSIKALISCHE KOMPONENTE
DIAGNOSTIC DE DÉFAILLANCES DE COMPOSANT PHYSIQUE

(30) Priority: 10.03.2016 US 201615066529
(43) Date of publication of application: 13.09.2017
(73) Proprietor: Simmonds Precision Products, Inc., Vergennes, VT 05491 (US)
(72) Inventor: DION, Bernard, Monkton, VT 05469 (US); SOPKO, Richard Joseph, South Burlington, VT 05403 (US)
(74) Representative: Dehns

(56) References cited:
- EP-A2- 2 884 404
- US-A1- 2007 005 297
- US-A1- 2014 358 487
- US-B2- 7 634 382

## Description

### BACKGROUND

The present disclosure relates generally to computerized systems, and more particularly to computerized systems that can utilize measured sensor data of components for fault diagnostics.

Many complex systems of components, such as modern aircraft systems, incorporate health and usage management systems (HUMS) to diagnose fault conditions and/or predict a remaining useful life of system components. Such HUMS often utilize and/or include sensor devices that monitor physical characteristics of the system components and relay the measured data to a central controller device. The HUMS controller typically compares the measured sensor data to one or more fault thresholds and/or diagnostic patterns to diagnose and/or predict potential fault conditions of the components as disclosed in EP 2 884 404 A2.

However, reliable prediction and detection of component fault conditions relies on accurate characterization of the underlying fault indicators. Inaccurate characterization of the underlying indicators can negatively impact performance of the fault detection function through possible decreased accuracy of detection and/or increased false alarm rates.

### SUMMARY

To overcome these drawbacks, there is provided a method and a system as defined in the independent claims. In one example, a method includes measuring sensor data of at least one physical component having a known operational status during operation of the at least one physical component. The method further includes generating, by a computing device comprising at least one processor, a plurality of data points from the measured sensor data. Each of the plurality of data points represents a measured occurrence of a feature of the measured sensor data. The method further includes iteratively sampling with replacement, by the computing device, the plurality of data points to generate a plurality of subsets of the plurality of data points, and determining, by the computing device within each of the plurality of subsets, a confidence interval having an upper bound and a lower bound to generate a plurality of confidence intervals having respective upper bounds and lower bounds. The method further includes generating, by the computing device, a composite confidence interval having a composite upper bound based on a first central tendency of the upper bounds of the plurality of confidence intervals and a composite lower bound based on a second central tendency of the lower bounds of the plurality of confidence intervals.

In another example, a system includes at least one processor and a computing device. The computing device includes one or more processors and computer-readable memory encoded with instructions that, when executed by the at least one processor, cause the computing device to receive, from the at least one sensor, measured sensor data of at least one physical component having a known operational status measured during operation of the at least one physical component. The computer-readable memory of the computing device is further encoded with instructions that, when executed by the at least one processor, cause the computing device to generate a plurality of data points from the measured sensor data, each of the plurality of data points representing a measured occurrence of a feature of the measured sensor data, and iteratively sampling with replacement the plurality of data points to generate a plurality of subsets of the plurality of data points. The computer-readable memory of the computing device is further encoded with instructions that, when executed by the at least one processor, cause the computing device to determine, within each of the plurality of subsets, a confidence interval having an upper bound and a lower bound to generate a plurality of confidence intervals having respective upper bounds and lower bounds, and generate a composite confidence interval having a composite upper bound based on a first central tendency of the upper bounds of the plurality of confidence intervals and a composite lower bound based on a second central tendency of the lower bounds of the plurality of confidence intervals.

In another example, a health and usage management system includes at least one sensor disposed within an aircraft and a controller device disposed within the aircraft. The controller device includes one or more processors and computer-readable memory encoded with instructions that, when executed by the at least one processor, cause the controller device to receive, from the at least one sensor, measured sensor data of at least one first physical component of the aircraft having an unknown operational status measured during operation of the at least one physical component. The computer-readable memory of the controller device is further encoded with instructions that, when executed by the at least one processor, cause the controller device to identify a feature of the measured sensor data of the at least one first physical component of the aircraft, and identify a fault condition of the at least one first physical component in response to determining that the feature of the measured sensor data is not included within a composite confidence interval. The composite confidence interval includes a composite upper bound based on a first central tendency of upper bounds of a plurality of confidence intervals determined for each of a plurality of subsets of measured sensor data of at least one second physical component having a known operational status. Each of the plurality of subsets of the measured sensor data of the at least one second physical component are generated based on an iterative sampling with replacement of a plurality of data points from the measured sensor data of the at least one second physical component. Each of the plurality of data points represents a measured occurrence of a feature of the measured sensor data of the at least one second physical component. The composite confidence interval further includes a composite lower bound based on a second central tendency of lower bounds of the plurality of confidence intervals determined for each of the plurality of subsets of the measured sensor data of the at least one second physical component having the known operational status.

### BRIEF DESCRIPTION OF THE DRAWINGS

FIG. 1 is a schematic block diagram of an example system that can generate a composite confidence interval corresponding to a feature of measured sensor data of at least one physical component.
FIG. 2 is a schematic block diagram illustrating further details of an example of generating a composite confidence interval corresponding to a feature of measured sensor data of at least one physical component.
FIG. 3 is a schematic block diagram of an example health and usage management system that can identify a fault condition of at least one physical component based on a composite confidence interval corresponding to a feature of measured sensor data.
FIG. 4 is a flow diagram illustrating example operations of a health and usage management system to identify a fault condition of at least one physical component.
FIG. 5 is a flow diagram illustrating example operations to generate a composite confidence interval corresponding to a feature of measured sensor data of at least one physical component.

### DETAILED DESCRIPTION

According to techniques of this disclosure, a computing device can generate a composite confidence interval corresponding to a feature of measured sensor data (e.g., a feature corresponding to amplitude of vibration, level of strain, or other feature) of at least one physical component having a known (e.g., healthy) operational status. Using sampling techniques described herein, the computing device can generate the composite confidence interval based on a central tendency of upper and lower bounds of multiple (e.g., tens, hundreds, thousands, or more) sampled subsets of the measured sensor data. As such, the composite confidence interval can more accurately represent a distribution of the feature of the measured sensor data among a population of like components having the known (e.g., healthy) operational status than would otherwise be obtained using a normal distribution or other traditional statistical analyses. As described herein, a health and usage monitoring system (HUMS) can compare measured sensor data for a corresponding physical component of e.g., an aircraft, having an unknown operational status to identify a fault condition of the component. As such, techniques of this disclosure can increase the accuracy of fault diagnosis of components, thereby helping to increase system reliability. The increased accuracy of fault diagnosis can further help to decrease a frequency of occurrence of false diagnosis of fault conditions (i.e., false alarms), thereby decreasing the time and cost associated with possibly unnecessary and/or premature maintenance to repair or replace the system component.

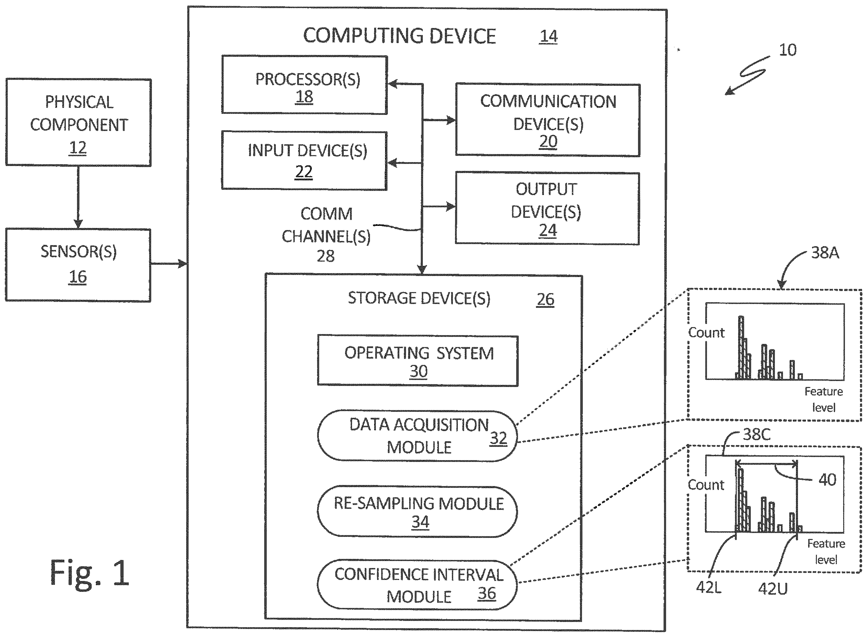

FIG. 1 is a schematic block diagram of an example system 10 that can generate a composite confidence interval corresponding to a feature of measured sensor data of at least one physical component 12. As illustrated in FIG. 1, system 10 further includes computing device 14 and one or more sensors 16. Computing device 14 includes one or more processors 18, one or more communication devices 20, one or more input devices 22, one or more output devices 24, one or more storage devices 26, and one or more communication channels 28. Storage device(s) 26 includes operating system 30, data acquisition module 32, resampling module 34, and confidence interval module 36.

Physical component 12 can be any physical component that can experience functional and/or physical degradation during operation thereof. For instance, physical component 12 can be a rotating component, such as a shaft, bearing, or other rotational component included in, e.g., a gas turbine engine of an aircraft. As another example, physical component 12 can be a structural support component, such as a strut of a gas turbine engine or aircraft landing gear. In general, physical component 12 can be any stand-alone or system-integrated physical component that can experience operational degradation, such as cracking, bending, warping, or other structural or functional degradation.

Sensor(s) 16 can include any one or more sensing devices capable of sensing physical characteristics of physical component 12 during operation of physical component 12. For instance, sensor(s) 16 can include any one or more of an accelerometer, strain gauge, temperature sensor, pressure sensor, torque sensor, rotary encoder, or other sensors. Sensor(s) 16, as illustrated in FIG. 1, can be operatively coupled to physical component 12 and computing device 14 to sense the one or more physical characteristics of physical component 12 during operation of physical component 12 and transmit the sensed data to computing device 14. For instance, sensor(s) 16 can be electrically coupled, physically coupled, or otherwise coupled to physical component 12 to measure physical characteristics of physical component 12 during operation thereof. Sensor(s) 16 can be electrically and/or communicatively coupled with computing device 14 via, e.g., one or more wired or wireless communication networks, or both.

As illustrated in FIG. 1, system 10 further includes computing device 14. Examples of computing device 14 include, but are not limited to, desktop computers, servers, mainframes, laptop computers, tablet computers, mobile phones (including smartphones), or other computing devices. In some examples, computing device 14 can be integrated with a testing environment configured to retrieve and process data corresponding to operation of physical component 12 (e.g., via sensor(s) 16).

Computing device 14, as illustrated in FIG. 1, further includes one or more processors 18. Processor(s) 18, in one example, are configured to implement functionality and/or process instructions for execution within computing device 14. For instance, processor(s) 18 can be capable of processing instructions stored in storage device(s) 26. Examples of processor(s) 18 can include any one or more of a microprocessor, a controller, a digital signal processor (DSP), an application specific integrated circuit (ASIC), a field-programmable gate array (FPGA), or other equivalent discrete or integrated logic circuitry.

Storage device(s) 26 can be configured to store information within computing device 14 during operation. Storage device(s) 26, in some examples, are described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, storage device(s) 26 are a temporary memory, meaning that a primary purpose of storage device(s) 26 is not long-term storage. Storage device(s) 26, in some examples, are described as volatile memory, meaning that storage device(s) 26 do not maintain stored contents when power to computing device 14 is turned off. Examples of volatile memories can include random access memories (RAM), dynamic random access memories (DRAM), static random access memories (SRAM), and other forms of volatile memories. In some examples, storage device(s) 26 are used to store program instructions for execution by processor(s) 18. Storage device(s) 26, in one example, are used by software or applications running on computing device 14 (e.g., a software program implementing functionality attributed herein to data acquisition module 32, resampling module 34, and/or confidence interval module 36) to temporarily store information during program execution.

Storage device(s) 26, in some examples, also include one or more computer-readable storage media. Storage device(s) 26 can be configured to store larger amounts of information than volatile memory. Storage device(s) 26 can further be configured for long-term storage of information. In some examples, storage device(s) 26 include non-volatile storage elements. Examples of such non-volatile storage elements can include magnetic hard discs, optical discs, floppy discs, flash memories, or forms of electrically programmable memories (EPROM) or electrically erasable and programmable (EEPROM) memories.

Computing device 14, in some examples, also includes communications device(s) 20. Computing device 14, in one example, utilizes communication device(s) 20 to communicate with external devices via one or more networks, such as one or more wired or wireless networks or both. Communications device(s) 20 can be a network interface card, such as an Ethernet card, an optical transceiver, a radio frequency transceiver, or any other type of device that can send and receive information. Other examples of such network interfaces can include Bluetooth, 3G, 4G, and WiFi radio computing devices, as well as Universal Serial Bus (USB).

Computing device 14, in some examples, also includes input device(s) 22. Input device(s) 22, in some examples, are configured to receive input from a user. Examples of input device(s) 22 can include a mouse, a keyboard, a microphone, a camera device, a presence-sensitive and/or touch-sensitive display, or other type of device configured to receive input from a user.

Output device(s) 24 can be configured to provide output to a user. Examples of output device(s) 24 can include a display device, a sound card, a video graphics card, a speaker, a cathode ray tube (CRT) monitor, a liquid crystal display (LCD), a light emitting diode (LED) display, an organic light emitting diode (OLED) display, or other type of device for outputting information in a form understandable to users or machines.

Each of processor(s) 18, communication device(s) 20, input device(s) 22, output device(s) 24, and storage device(s) 26 can be interconnected (physically, communicatively, and/or operatively) for inter-component communications. For instance, as illustrated in FIG. 1, processor(s) 18, communication device(s) 20, input device(s) 22, output device(s) 24, and storage device(s) 26 can be coupled by one or more communication channels 28. In some examples, communication channel(s) 28 can include a system bus, a network connection, an inter-process communication data structure, or any other structure or method for communicating data.

As illustrated in FIG. 1, storage device(s) 26 can include operating system 30, data acquisition module 32, resampling module 34, and confidence interval module 36. Operating system 30 can be executable by processor(s) 18 to control the operation of components of computing device 14. For instance, operating system 30, in one example, facilitates the communication of a software program implementing techniques attributed herein to data acquisition module 32, resampling module 34, and confidence interval module 36 with processor(s) 18, communication device(s) 20, input device(s) 22, and output device(s) 24.

In operation, sensor(s) 16 measure physical characteristics of physical component 12 during operation of physical component 12 and transmit the measured sensor data to computing device 14. Physical component 12 can be a physical component having a known operational status, such as a known "healthy" status, in that physical component 12 satisfies threshold criteria corresponding to acceptable operating parameters according to a design specification of physical component 12. For instance, acceptable operating parameters can specify a range of acceptable vibration amplitudes of physical component 12 during rotation of physical component 12 within a range of rotational frequencies. As another example, acceptable operating parameters can specify an acceptable amplitude of strain experienced by physical component 12 within a range of physical loads.

Physical characteristics of physical component 12 measured by sensor(s) 16 can include, e.g., vibration data sensed via one or more accelerometers and/or velocimeters, structural response data measured under a physical load via a structural response sensor (e.g., strain data sensed via one or more strain gauges), temperature data sensed via one or more temperature sensors, pressure data sensed via one or more pressure sensors, or other measured sensor data corresponding to physical characteristics of physical component 12. As one example, physical component 12 can be a rotating shaft of, e.g., a gas turbine engine. Sensor(s) 16 can include an accelerometer that senses acceleration data corresponding to vibration of the rotating shaft as the shaft is rotated at a one or more predetermined frequencies. As another example, physical component 12 can be a strut of, e.g., a landing gear system of an aircraft. In such an example, sensor(s) 16 can include a strain gauge that senses strain data experienced by physical component 12 under a predetermined physical loading force.

Computing device 14 receives the measured sensor data from sensor(s) 16 via, e.g., communication device(s) 20. Data acquisition module 32, executing on processor(s) 18, can process the received sensor data to generate a plurality of data points from the measured sensor data, each data point representing a measured occurrence of a feature of the measured sensor data. For example, the measured sensor data can be vibration data received from an accelerometer included in sensor(s) 16 and sensed over a threshold period of time (e.g., a threshold number of seconds, minutes, or other threshold periods of time). Data acquisition module 32 can measure a feature of the received vibration data, such as an amplitude of the vibration data, and can generate a plurality of points corresponding to measured occurrences of the feature. For instance, as is graphically illustrated by histogram 38A, each of the plurality of data points can correspond to a measured occurrence of a feature level (e.g., an amplitude of vibration in this example), and can vary across a range of the feature level. As illustrated by histogram 38, a number of occurrences of each measured occurrence of a feature level (e.g., amplitude of vibration) can be numerically represented along the vertical "count" axis. The domain of measured occurrences of each feature level and the range of the number of occurrences of each feature level can represent a distribution of the feature of the measured sensor data corresponding to operation of physical component 12 having the known operational status (e.g., healthy operational status).

Data acquisition module 32 can measure the feature of received sensor data (e.g., amplitude of vibration) from any one or more additional physical components (e.g., additional components that are of a same type as physical component 12) having the known operational status (e.g., healthy operational status). Data acquisition module 32 can aggregate the measured feature data from the plurality of physical components to form a baseline distribution of the feature of the measured sensor data corresponding to operation of a population of physical components 12 having the known operational status. That is, while illustrated in FIG. 1 with respect to a single physical component 12, in some examples, data acquisition module 32 can retrieve sensor data from multiple physical components 12, and can aggregate the measured feature data to generate the plurality of data points graphically represented by histogram 38A. As such, data acquisition module 32 can form a set of data points corresponding to measured occurrences of a feature of measured sensor data across a population of physical components 12.

As is further described below, resampling module 34 can iteratively sample with replacement the plurality of data points represented by histogram 38A to generate a plurality of subsets of the data points, such as tens, hundreds, thousands, or more subsets of the data points. Sampling with replacement, as described herein, can be defined as iterative sampling of data points such that each sample is statistically independent of other samples (i.e., a probability that a first sample data point is chosen from a set of data points is unaffected by prior or later samples chosen from the set of data points). Each sample can include a randomly-selected subset of the data points represented by histogram 38A. Such random selection can include a non-uniform iterative selection of subsets of the data points accomplished via, e.g., a random number generator or other random seeding to achieve a non-uniform pattern of data point selection. As such, though referred to herein as "random" selection, it should be understood that random selection can include any non-uniform pattern of data point selection, such as pseudo-random or other non-uniform selections.

Confidence interval module 36 can determine a confidence interval for each of the sampled subsets of data points, as is further described below. Accordingly, confidence interval module 36 can determine a plurality of confidence intervals, each confidence interval corresponding to one of the plurality of sampled subsets of data points. Each of the plurality of confidence intervals can range from a lower bound to an upper bound of the respective confidence interval. Each of the lower and upper bounds of each respective confidence interval can be selected to achieve a predetermined confidence level, such as a 95% confidence level. Confidence interval module 36 can generate a composite confidence interval, such as composite confidence interval 40 graphically represented by histogram 38C. In the example of FIG. 1, histogram 38C illustrates a same distribution of the plurality of data points as histogram 38A, but includes graphically-overlaid confidence interval lines corresponding to confidence interval 40. As illustrated, composite confidence interval 40 can range from a composite lower bound 42L to a composite upper bound 42U. Confidence interval module 36 can determine composite lower bound 42L based on a central tendency of the group of lower bounds of the plurality of confidence intervals. Confidence interval module 36 can determine composite upper bound 42U based on a central tendency of the group of upper bounds of the plurality of composite intervals. The central tendencies can be, e.g., a mode, a mean, a median, or other central tendency of the respective groups of upper and lower bounds.

Accordingly, computing device 14 of system 10 can generate composite confidence interval 40 that is based on a central tendency of upper and lower bounds of each of a plurality of sampled subsets of measured sensor data of any one or more physical components 12. As such, system 10, implementing techniques of this disclosure, can help to increase an accuracy of representation of composite confidence interval 40 of the population of the one or more physical components 12 having a known (e.g., healthy) operational status.

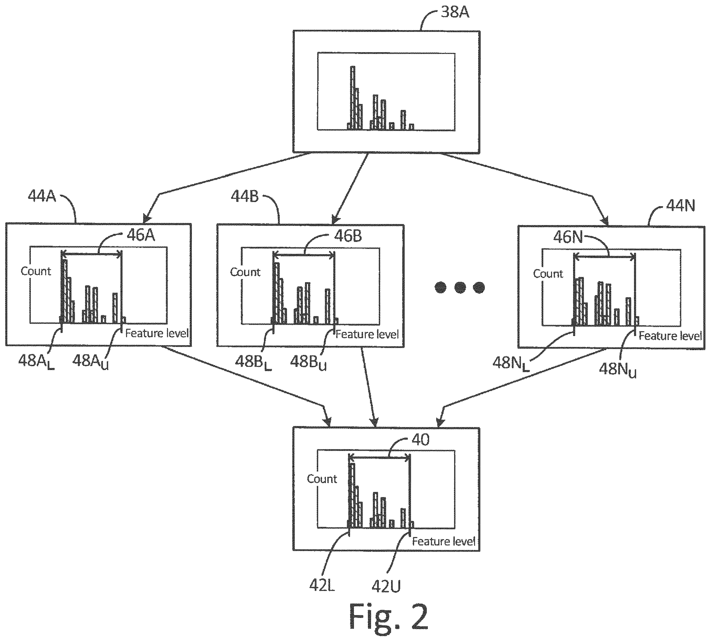

FIG. 2 is a schematic block diagram illustrating further details of an example of generating composite confidence interval 40 corresponding to a feature of measured sensor data of at least one physical component 12. For purposes of clarity and ease of discussion, the example of FIG. 2 is described below within the context of system 10 of FIG. 1.

As illustrated in FIG. 2, data acquisition module 32 can generate a plurality of data points from measured sensor data received from sensor(s) 16, the plurality of data points graphically represented by histogram 38A. Each of the plurality of data points illustrated by histogram 38A can represent a measured occurrence of a feature of the measured sensor data received from sensor(s) 16, such as an amplitude of vibration data, an amplitude of strain data, or other feature of the measured sensor data.

Resampling module 34 can iteratively sample with replacement the plurality of data points represented by histogram 38A to generate a plurality of subsets of the plurality of data points represented by histogram 38A. For instance, as illustrated in FIG. 2, resampling module 34 can iteratively sample with replacement the plurality of data points represented by histogram 38A to generate the plurality of subsets of data points represented by histograms 44A-44N. It should be understood that the letter "N" of histogram 44N represents any arbitrary number of subsets of data points. As such, resampling module 34 can iteratively sample with replacement the plurality of data points represented by histogram 38A any number of times to generate, e.g., tens, hundreds, thousands, or more subsets of data points.

Resampling module 34 can sample with replacement the plurality of data points by randomly selecting a subset of (e.g., less than an entirety of) the plurality of data points represented by histogram 38A to generate each of the plurality of subsets of data points represented by histograms 44A-44N (collectively referred to herein as "histograms 44"). Accordingly, as illustrated in FIG. 2 by the differing distributions of histograms 44, each of the plurality of sampled subsets of data represented by histograms 44 can be different subsets of data points.

Confidence interval module 36 can determine a confidence interval for each of the plurality of sampled subsets of data points represented by histograms 44. For example, as illustrated in FIG. 2, confidence interval module 36 can determine confidence interval 46A for the sampled subset of data points represented by histogram 44A, confidence interval 46B for the sampled subset of data points represented by histogram 44B, and confidence interval 46N for the sampled subset of data points represented by histogram 44N. Confidence interval module 36 can determine the confidence intervals for each of the sampled subsets of data points represented by histograms 44 as ranging from a lower bound to an upper bound of the respective confidence intervals to achieve a confidence level. For instance, as illustrated, confidence interval module 36 can determine lower bound 48A_{L} and upper bound 48A_{U} defining confidence interval 46A to achieve a confidence level, such as a confidence level of 90%, 95%, 99%, or other confidence levels.

Confidence interval module 36 can determine lower bound 48A_{L} and upper bound 48A_{U} to achieve the confidence level such that a percentage of data points of the sampled subset of data points represented by histogram 44A that are included within confidence interval 46A is equal to the confidence level to be achieved. As an example, the confidence level to be achieved can be 95%. In such an example, confidence interval module 36 can determine lower bound 48A_{L} and upper bound 48A_{U} such that 95% of the data points included within the sampled subset of data points represented by histogram 44A have a value that is greater than (or equal to) lower bound 48A_{L} and less than (or equal to) upper bound 48A_{U}. As such, in the example where the confidence interval to be achieved is 95%, confidence interval module 36 can determine lower bound 48AL and upper bound 48AU to have feature level values such that 5% of the data points included within the sampled subset of data points represented by histogram 44A have a value that is either less than the feature level value corresponding to lower bound 48A_{L} or greater than the feature level value corresponding to upper bound 48A_{U}. Confidence interval module 36 can determine similarly determine lower bounds and upper bounds for each of the subsets of data points represented by histograms 44B-44N to determine a plurality of confidence intervals having respective upper bounds and lower bounds. For instance, as illustrated in FIG. 2, confidence interval module 36 can determine lower bound 48B_{L} and upper bound 48B_{U} defining confidence interval 46B and lower bound 48N_{L} and upper bound 48B_{U} defining confidence interval 46N. Confidence interval module 36 can determine lower bounds and upper bounds of confidence intervals 46A-46N (collectively referred to herein as "confidence intervals 46") to achieve a same confidence level for each of confidence intervals 46.

Confidence interval module 36 can determine composite interval 40 graphically represented on histogram 38C as ranging from composite lower bound 42L to composite upper bound 42U. Confidence interval module 36 can determine composite lower bound 42L based on a central tendency of lower bounds 48A_{L}-48N_{L} corresponding to the plurality of confidence intervals 46. The central tendency can be a mean, a mode, a median, or other central tendency of lower bounds 48A_{L}-48N_{L}. For instance, confidence interval module 36 can determine lower bound 42L as a feature level corresponding to a mean of the feature levels associated with lower bounds 48A_{L}-48N_{L}. Confidence interval module 36 can determine composite upper bound 42U based on a central tendency of upper bounds 48A_{U}-48N_{U}, such as a mean, a mode, a median, or other central tendency of upper bounds 48A_{U}-48N_{U}. Accordingly, confidence interval module 36 can determine composite interval 40 having composite lower bound 42L and composite upper bound 42U based on a central tendency of lower and upper bounds of each of the plurality of sampled subsets of data points represented by histograms 44.

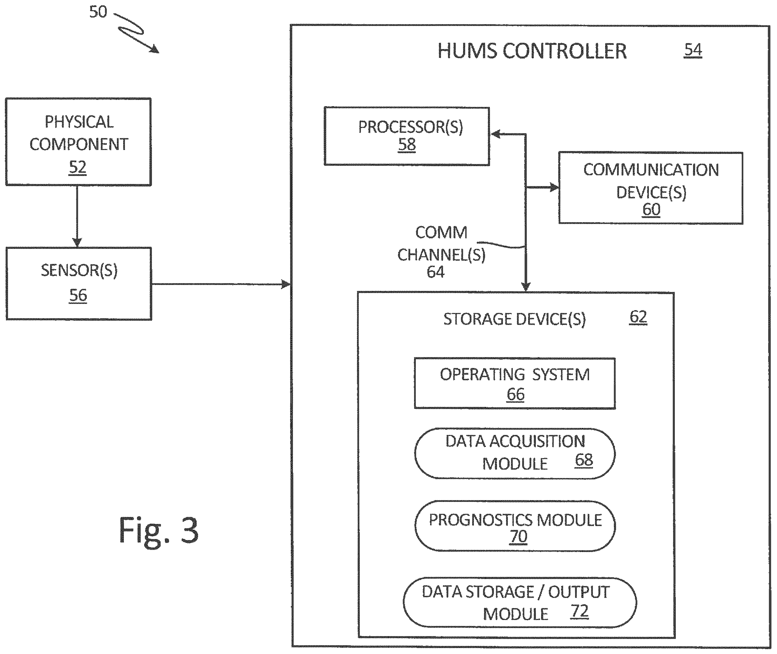

FIG. 3 is a schematic block diagram of health and usage management system (HUMS) 50 that can identify a fault condition of at least one physical component 52 based on confidence interval 40 (FIGS. 1-2). As illustrated in FIG. 3, HUMS 50 can further include HUMS controller device 54 and one or more sensors 56. HUMS controller 54 can include one or more processors 58, one or more communication devices 60, one or more storage devices 62, and one or more communication channels 64. Storage device(s) 62 can include operating system 66, data acquisition module 68, prognostics module 70, and data storage and output module 72.

HUMS controller 54 can be a controller device disposed within, e.g., an aircraft and configured to control operation of HUMS 50. For instance, HUMS controller 54 can be an electronics device positioned within an electronics bay or other area of an aircraft and configured to send and receive data to and from one or aircraft systems via an aircraft communications data bus (not illustrated) or other communications media. As further illustrated in FIG. 3, HUMS controller 54 can be electronically and/or communicatively coupled with sensor(s) 56 to receive measured data from sensor(s) 56 corresponding to physical component 52.

Physical component 52 can be substantially similar to physical component 12 (FIG. 1), but having an unknown operational status and not utilized by computing device 14 (FIG. 1) during generation of composite interval 40. For instance, physical component 12 can represent a shaft of a gas turbine engine having a known (e.g., healthy) operational status. In such an example, physical component 52 can be a different, but substantially similar shaft of a gas turbine engine having an unknown operational status.

Sensor(s) 56 can be substantially similar to sensor(s) 16, in that sensor(s) 56 can include any one or more sensing devices capable of sensing physical characteristics of physical component 56. For instance, sensor(s) 56 can include any one or more of an accelerometer, strain gauge, temperature sensor, pressure sensor, torque sensor, rotary encoder, or other sensors. Sensor(s) 56 can be disposed within an operating environment of physical component 52, such as an aircraft, aircraft engine, or other operating environment of physical component 52 to measure sensor data corresponding to physical characteristics of physical component 52.

Processor(s) 58 can be substantially similar to processor(s) 18 of computing device 14 (FIG. 1). For instance, processor(s) 58 can include any one or more of a microprocessor, a controller, DSP, ASIC, FPGA, or other equivalent discrete or integrated logic circuitry configured to implement functionality and/or process instructions for execution within HUMS controller 54.

Communications device(s) 60, in certain examples, are substantially similar to communications device(s) 20 (FIG. 1). In some examples, communications device(s) 60 can include discrete or analog circuitry configured to send and receive data according to a defined communication protocol, such as the Aeronautical Radio, Incorporated (ARINC) 429 communication protocol.

Storage device(s) 62 can be substantially similar to storage device(s) 26 (FIG. 1). For instance, storage device(s) 62 can include volatile and/or non-volatile computer-readable memory configured to store information within HUMS controller 54 during operation. Each of processor(s) 58, communication device(s) 60, and storage device(s) 62 can be interconnected (physically, communicatively, and/or operatively) for inter-component communications, such as via communication channel(s) 64, which can be substantially similar to communication channel(s) 28 of FIG. 1.

As illustrated in FIG. 3, storage device(s) 62 can include operating system 66, data acquisition module 68, prognostics module 70, and data storage and output module 72. Operating system 66 can be executable by processor(s) 58 to control the operation of components of HUMS controller 54. Data acquisition module 68, prognostics module 70, and data storage and output module 72 can each include computer-readable instructions which, when executed by processor(s) 58, cause HUMS controller 54 to operate in accordance with techniques described herein.

In operation, one or more composite confidence intervals corresponding to one or more features of measured sensor data associated with one or more physical components having known (e.g., healthy) operational statuses can be stored within storage device(s) 62. For instance, composite confidence interval 40 (FIGS. 1-2), ranging from composite lower bound 42L to composite upper bound 42U, can be stored within., e.g., non-volatile memory of storage device(s) 62. Storage of the one or more composite confidence intervals within storage device(s) 62 can be accomplished via transmission of the one or more confidence intervals from computing device 14 to HUMS controller 54 via one or more wired and/or wireless networks or via computer-readable storage media (e.g., USB drive, compact disc, floppy disc, or other computer-readable storage media).

Sensor(s) 56, in operation, measure physical characteristics of physical component 52 during operation of physical component 52 and transmit the measured sensor data to HUMS controller 54. Data acquisition module 68 can process the received sensor data to extract and/or measure a feature of the measured sensor data, such as a feature corresponding to amplitude of measured vibration data, amplitude of measured strain data, or other feature of the measured sensor data.

Prognostics module 70 can compare the measured feature to a composite confidence interval corresponding to the feature, such as composite confidence interval 40. Based on the comparison, prognostics module 70 can identify the presence and/or identity of a fault condition of physical component 52. For instance, prognostics module 70 can identify a fault condition of physical component 52 in response to determining that the feature of the measured sensor data received from sensor(s) 56 is not included within composite confidence interval 40, such as when a value of the feature is greater than (or equal to) composite upper bound 42U or less than (or equal to) composite lower bound 42L. In certain examples, prognostics module 70 can identify the presence of the fault condition of physical component 52 in response to determining that a value of a measured occurrence of the feature is not included within composite confidence interval 40 a threshold number of times (e.g., two, three, four, or more measured occurrences of the feature that are not included within composite confidence interval 40). In some examples, prognostics module 70 can identify the presence of the fault condition of physical component 52 in response to determining that a value of a measured occurrence of the feature is not included within composite confidence interval 40 a threshold number of times within a threshold period of time (e.g., one second, two seconds, or other threshold periods of time). Accordingly, prognostics module 70 can identify a fault condition of physical component 52, having an unknown operational status, based on a comparison of feature of measured sensor data of physical component 52 to composite confidence interval 40 that is representative of a distribution of the feature of the measured sensor data for a population of physical components that are substantially similar to physical component 52 and have a known, e.g., healthy, operational status.

In response to the identification of the fault condition of physical component 52, data storage and output module 72 can store an indication of the fault condition and/or at least a portion of the measured sensor data within storage device(s) 62 (e.g., within non-volatile memory of storage device(s) 62). Accordingly, data storage and output module 72 can later output the stored indication of the fault condition and/or the stored measured sensor data, such as for download by a maintenance computer. The indication of the fault condition and corresponding measured sensor data can facilitate further fault diagnostics by maintenance personnel, thereby helping to increase overall system reliability and decrease a time required to diagnose fault conditions associated with physical component 52.

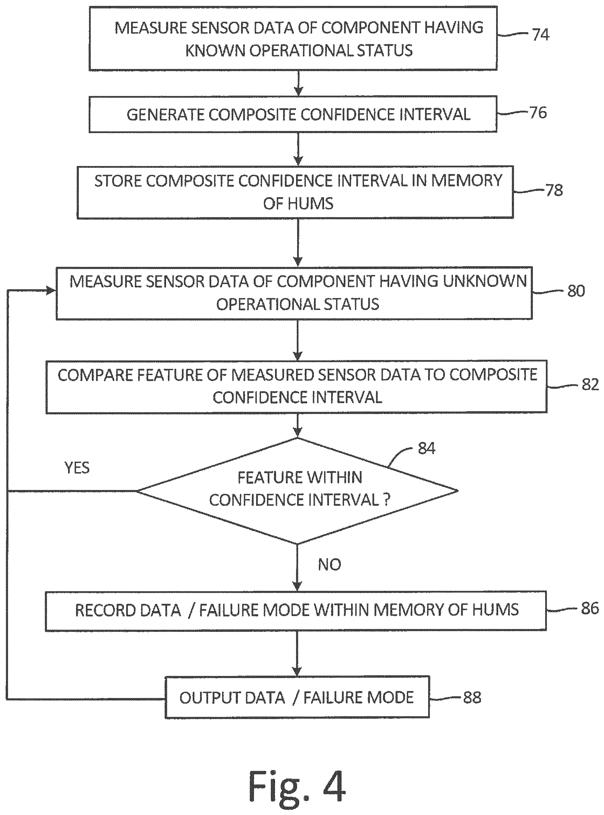

FIG. 4 is a flow diagram illustrating example operations of a health and usage management system (HUMS) to identify a fault condition of at least one physical component. For purposes of clarity and ease of discussion, the example operations are described below within the context of system 10 and HUMS 50 of FIGS. 1-3.

Sensor data of at least one physical component having a known operational status can be measured during operation of the at least one physical component (74). For example, sensor(s) 16 can measure physical characteristics of physical component 12 during operation of physical component 12. A composite confidence interval can be generated by the computing device based on the measured sensor data (76). For instance, confidence interval module 36, executing on processor(s) 18 of computing device 14, can generate confidence interval 40.

The composite confidence interval can be stored in memory of a health and usage management system (HUMS) (78). As an example, composite confidence interval 40 can be stored in, e.g., non-volatile memory of storage device(s) 62 of HUMS controller 54. Sensor data of at least one physical component having an unknown operational status can be measured by one or more sensors of the HUMS during operation of the at least one physical component having the unknown operational status (80). For example, sensor(s) 56 of HUMS 50 can measure physical characteristics of physical component 52 having an unknown operational status. A feature of the measured sensor data can be compared to the composite confidence interval (82). For instance, data acquisition module 68 of HUMS controller 54 can identify a feature of the measured sensor data of the physical component having the unknown operational status. Prognostics module 70 can compare the feature of the measured sensor data to composite confidence interval 70.

A determination of whether the feature of the measured sensor data is within the composite confidence interval can be performed (84). As one example, prognostics module 70 can determine that the feature of the measured sensor data is not included within composite confidence interval 40 in response to determining that the feature of the measured sensor data is greater than (or equal to) composite upper bound 42U or less than (or equal to) composite lower bound 42L. In examples where it is determined that the feature of the measured sensor data is within the composite confidence interval ("YES" branch of 84), the sensor data of at least one physical component having the unknown operational status can continue to be measured by the one or more sensors of the HUMS. In examples where it is determined that the feature of the measured sensor data is not within the composite confidence interval ("NO" branch of 84), an indication of an identified failure mode of the at least one physical component and/or at least a portion of the measured sensor data can be stored and/or output (86). For example, data storage and output module 72 of HUMS controller 54 can store an indication of the fault condition of physical component 52 and/or at least a portion of the measured sensor data within, e.g., non-volatile memory of storage device(s) 62. Data storage and output module 72 can output the indication of the fault condition and/or the stored measured sensor data to, e.g., a maintenance computer or other computing device to facilitate fault diagnostics of physical component 52 (88). In some examples, sensor data of at least one physical component can continue be measured by one or more sensors of the HUMS during operation of the at least one physical component (80).

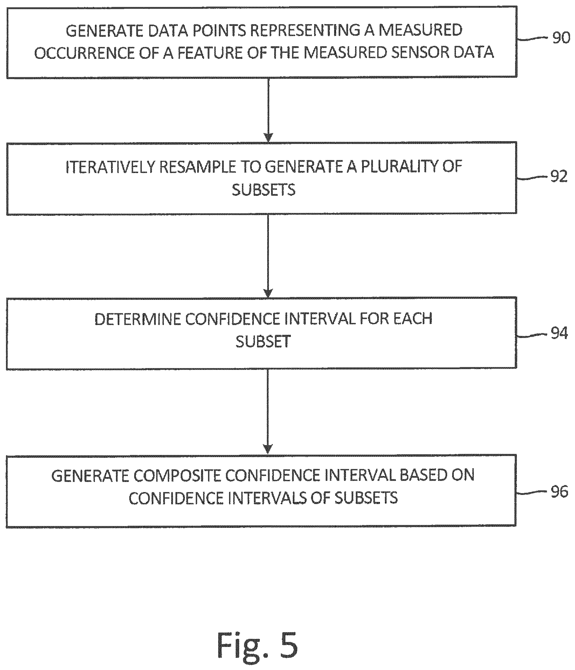

FIG. 5 is a flow diagram illustrating example operations to generate a composite confidence interval corresponding to a feature of measured sensor data of at least one physical component. For purposes of clarity and ease of discussion, the example operations are described below within the context of system 10 of FIGS. 1-2.

A plurality of data points can be generated from measured sensor data of at least one physical component having a known operational status, each of the plurality of data points representing a measured occurrence of a feature of the measured sensor data (90). For example, data acquisition module 32 can receive sensor data from sensor(s) 16 corresponding to measured sensor data of physical component 12 having a known (e.g., healthy) operational status. Data acquisition module 32 can generate the plurality of data points represented by histogram 38A from the received measured sensor data.

The plurality of data points can be iteratively sampled with replacement to generate a plurality of subsets of the plurality of data points (92). For instance, resampling module 34 can iteratively sample with replacement the plurality of data points represented by histogram 38A to generate the plurality of subsets of data points represented by histograms 44A-44N. A confidence interval having an upper bound and a lower bound can be determined within each of the plurality of subsets to generate a plurality of confidence intervals having respective upper bounds and lower bounds (94). For example, confidence interval module 36 can generate confidence intervals 46A-46N for the plurality of subsets of data points represented by histograms 44A-44N. Each of confidence interval 46A-46N can range from a respective lower bound to a respective upper found. For instance, confidence interval 46A can range from confidence interval lower bound 48A_{L} to confidence interval upper bound 48A_{U}. Similarly, confidence interval 46B can range from confidence interval lower bound 48B_{L} to confidence interval upper bound 48B_{U}, and confidence interval 46N can range from confidence interval lower bound 48N_{L} to confidence interval upper bound 48N_{U}.

A composite confidence interval can be generated, the composite confidence interval having a composite upper bound based on a first central tendency of the upper bounds of the plurality of confidence intervals and a composite lower bound based on a second central tendency of the lower bounds of the plurality of confidence intervals (96). As an example, confidence interval module 36 can generate composite confidence interval 40 having composite lower bound 42L and composite upper bound 42U. Composite lower bound 42L can be based on a central tendency, such as a mean, a mode, a median, or other central tendency of the lower bounds of confidence intervals 44A-44N. Composite upper bound 42U can be based on a central tendency, such as a mean, a mode, a median, or other central tendency of the upper bounds of confidence intervals 44A-44N.

As such, according to techniques of this disclosure, a computing device, such as computing device 14, can generate a composite confidence interval (e.g., composite confidence interval 40) corresponding to a feature of measured sensor data (e.g., measured by sensor(s) 16) of at least one physical component (e.g., physical component 12) having a known (e.g., healthy) operational status. The computing device can utilize the sampling techniques described herein to generate the composite confidence interval based on a central tendency of upper and lower bounds of multiple (e.g., tens, hundreds, thousands, or more) sampled subsets of the measured sensor data, thereby accurately representing a distribution of the feature of the measured sensor data among a population of like components. A health and usage monitoring system (HUMS), such as HUMS 50, can store the generated composite confidence interval for identification of a fault condition of a corresponding physical component (e.g., physical component 52) having an unknown operational status. As such, techniques of this disclosure can increase the accuracy of fault diagnosis of components, thereby increasing system reliability and decreasing costs associated with possible premature or unnecessary maintenance efforts to repair or replace the system component.

The following are non-exclusive descriptions of possible embodiments of the present invention.

A method can include measuring sensor data of at least one physical component having a known operational status during operation of the at least one physical component. The method can further include generating, by a computing device including at least one processor, a plurality of data points from the measured sensor data. Each of the plurality of data points can represent a measured occurrence of a feature of the measured sensor data. The method can further include iteratively sampling with replacement, by the computing device, the plurality of data points to generate a plurality of subsets of the plurality of data points, and determining, by the computing device within each of the plurality of subsets, a confidence interval having an upper bound and a lower bound to generate a plurality of confidence intervals having respective upper bounds and lower bounds. The method can further include generating, by the computing device, a composite confidence interval having a composite upper bound based on a first central tendency of the upper bounds of the plurality of confidence intervals and a composite lower bound based on a second central tendency of the lower bounds of the plurality of confidence intervals.

The method of the preceding paragraph can optionally include, additionally and/or alternatively, any one or more of the following features, configurations, operations, and/or additional components.

The at least one physical component can include at least one first physical component. The method can further include measuring, by one or more sensors positioned within an aircraft, sensor data of at least one second physical component of the aircraft having an unknown operational status during operation of the at least one second physical component. The method can further include identifying, by at least one processor of a health and usage management system (HUMS), a feature of the measured sensor data of the at least one second physical component of the aircraft, and identifying, by the at least one processor of the HUMS, a fault condition of the at least one second physical component in response to determining that the feature of the measured sensor data of the at least one second physical component is not included within the composite confidence interval.

The method can further include storing, by the at least one processor of the HUMS, at least a portion of the measured sensor data of the at least one second physical component within non-volatile computer-readable memory of the HUMS in response to identifying the fault condition of the at least one second physical component.

The method can further include storing, by the at least one processor of the HUMS, an indication of the fault condition of the at least one second physical component within non-volatile computer-readable memory of the HUMS in response to identifying the fault condition of the at least one second physical component.

The method can further include outputting, by the at least one processor of the HUMS, an indication of the fault condition of the at least one second physical component and at least a portion of the measured sensor data of the at least one second physical component in response to identifying the fault condition of the at least one physical component.

Measuring the sensor data of the at least one physical component having the known operational status can include measuring vibration data of the at least one physical component using one or more accelerometers. The feature of the measured sensor data can include an amplitude of the vibration data.

Measuring the sensor data of the at least one physical component having the known operational status can include measuring structural response data of the at least one physical component using one or more structural response gauges. The feature of the measured sensor data can include an amplitude of the structural response data.

Iteratively sampling with replacement the plurality of data points can include iteratively sampling with replacement randomly-selected data points from the plurality of data points to generate the plurality of subsets of the plurality of data points.

Determining, within each of the plurality of subsets, the confidence interval having the upper bound and the lower bound can include selecting the upper bound and the lower bound of the confidence interval to achieve a threshold confidence level.

The first central tendency of the upper bounds of the plurality of confidence intervals can include one of a median, a mean, and a mode of the plurality of upper bounds of the plurality of confidence intervals. The second central tendency of the lower bounds of the plurality of confidence intervals can include one of a median, a mean, and a mode of the plurality of lower bounds of the plurality of confidence intervals.

A system can include at least one processor and a computing device. The computing device can include one or more processors and computer-readable memory encoded with instructions that, when executed by the at least one processor, cause the computing device to receive, from the at least one sensor, measured sensor data of at least one physical component having a known operational status measured during operation of the at least one physical component. The computer-readable memory of the computing device can be further encoded with instructions that, when executed by the at least one processor, cause the computing device to generate a plurality of data points from the measured sensor data, each of the plurality of data points representing a measured occurrence of a feature of the measured sensor data, and iteratively sample with replacement the plurality of data points to generate a plurality of subsets of the plurality of data points. The computer-readable memory of the computing device can be further encoded with instructions that, when executed by the at least one processor, cause the computing device to determine, within each of the plurality of subsets, a confidence interval having an upper bound and a lower bound to generate a plurality of confidence intervals having respective upper bounds and lower bounds, and generate a composite confidence interval having a composite upper bound based on a first central tendency of the upper bounds of the plurality of confidence intervals and a composite lower bound based on a second central tendency of the lower bounds of the plurality of confidence intervals.

The system of the preceding paragraph can optionally include, additionally and/or alternatively, any one or more of the following features, configurations, operations, and/or additional components.

The at least one sensor can include an accelerometer. Receiving the measured sensor data from the at least one sensor can include receiving vibration data of the at least one physical component from the accelerometer. The feature of the measured sensor data can include an amplitude of the vibration data.

The at least one sensor can include a structural response sensor. Receiving the measured sensor data from the at least one sensor can include receiving structural response data of the at least one physical component from the structural response sensor. The feature of the measured sensor data can include an amplitude of the structural response data.

The computer-readable memory of the computing device can be further encoded with instructions that, when executed by the at least one processor, cause the computing device to iteratively sample with replacement the plurality of data points by at least causing the computing device to iteratively sample with replacement randomly-selected data points from the plurality of data points to generate the plurality of subsets of the plurality of data points.

The computer-readable memory of the computing device can be further encoded with instructions that, when executed by the at least one processor, cause the computing device to determine, within each of the plurality of subsets, the confidence interval having the upper bound and the lower bound by at least causing the computing device to select the upper bound and the lower bound of the confidence interval to achieve a threshold confidence level.

The first central tendency of the upper bounds of the plurality of confidence intervals can include one of a median, a mean, and a mode of the plurality of upper bounds of the plurality of confidence intervals. The second central tendency of the lower bounds of the plurality of confidence intervals can include one of a median, a mean, and a mode of the plurality of lower bounds of the plurality of confidence intervals.

A health and usage management system can include at least one sensor disposed within an aircraft and a controller device disposed within the aircraft. The controller device can include one or more processors and computer-readable memory encoded with instructions that, when executed by the at least one processor, cause the controller device to receive, from the at least one sensor, measured sensor data of at least one first physical component of the aircraft having an unknown operational status measured during operation of the at least one physical component. The computer-readable memory of the controller device can be further encoded with instructions that, when executed by the at least one processor, cause the controller device to identify a feature of the measured sensor data of the at least one first physical component of the aircraft, and identify a fault condition of the at least one first physical component in response to determining that the feature of the measured sensor data is not included within a composite confidence interval. The composite confidence interval can include a composite upper bound based on a first central tendency of upper bounds of a plurality of confidence intervals determined for each of a plurality of subsets of measured sensor data of at least one second physical component having a known operational status. Each of the plurality of subsets of the measured sensor data of the at least one second physical component can be generated based on an iterative sampling with replacement of a plurality of data points from the measured sensor data of the at least one second physical component. Each of the plurality of data points can represent a measured occurrence of a feature of the measured sensor data of the at least one second physical component. The composite confidence interval can further include a composite lower bound based on a second central tendency of lower bounds of the plurality of confidence intervals determined for each of the plurality of subsets of the measured sensor data of the at least one second physical component having the known operational status.

The health and usage management system of the preceding paragraph can optionally include, additionally and/or alternatively, any one or more of the following features, configurations, operations, and/or additional components.

The computer-readable memory of the controller device can include non-volatile computer-readable memory. The computer-readable memory of the controller device can be further encoded with instructions that, when executed by the one or more processors, cause the controller device to store at least a portion of the measured sensor data of at the least one first physical component within the non-volatile computer-readable memory of the controller device in response to identifying the fault condition of the at least one first physical component.

The computer-readable memory of the controller device can include non-volatile computer-readable memory. The computer-readable memory of the controller device can be further encoded with instructions that, when executed by the one or more processors, cause the controller device to store an indication of the fault condition of the at least one first physical component within the non-volatile computer-readable memory of the controller device in response to identifying the fault condition of the at least one first physical component.

The controller device can further include at least one communications device configured to send and receive data. The computer-readable memory of the controller device can be further encoded with instructions that, when executed by the one or more processors, cause the controller device to output, using the communications device, an indication of the fault condition of the at least one first physical component and at least a portion of the measured sensor data of the at least one first physical component in response to identifying the fault condition of the at least one first physical component.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method comprising:
measuring sensor data of at least one physical component having a known operational status during operation of the at least one physical component;
generating, by a computing device comprising at least one processor, a plurality of data points from the measured sensor data, each of the plurality of data points representing a measured occurrence of a feature of the measured sensor data;
iteratively sampling with replacement, by the computing device, the plurality of data points to generate a plurality of subsets of the plurality of data points;
determining, by the computing device within each of the plurality of subsets, a confidence interval having an upper bound and a lower bound that include a defined percentage of the respective subset of the plurality of data points to generate a plurality of confidence intervals having respective upper bounds and lower bounds; and
generating, by the computing device, a composite confidence interval having a composite upper bound based on a first central tendency of the upper bounds of the plurality of confidence intervals and a composite lower bound based on a second central tendency of the lower bounds of the plurality of confidence intervals;
wherein measuring the sensor data of the at least one physical component having the known operational status comprises measuring vibration data of the at least one physical component using one or more vibration sensors; and
wherein the feature of the measured sensor data comprises an amplitude of the vibration data, or
wherein measuring the sensor data of the at least one physical component having the known operational status comprises measuring structural response data of the at least one physical component using one or more structural response sensors; and
wherein the feature of the measured sensor data comprises an amplitude of the structural response data.

2. The method of claim 1, wherein the at least one physical component comprises at least one first physical component, the method further comprising:
measuring, by one or more sensors positioned within an aircraft, sensor data of at least one second physical component of the aircraft having an unknown operational status during operation of the at least one second physical component;
identifying, by at least one processor of a health and usage management system HUMS, a feature of the measured sensor data of the at least one second physical component of the aircraft; and
identifying, by the at least one processor of the HUMS, a fault condition of the at least one second physical component in response to determining that the feature of the measured sensor data of the at least one second physical component is not included within the composite confidence interval.

3. The method of claim 2, further comprising:
storing, by the at least one processor of the HUMS, at least a portion of the measured sensor data of the at least one second physical component within a non-volatile computer-readable memory of the HUMS in response to identifying the fault condition of the at least one second physical component; or
storing, by the at least one processor of the HUMS, an indication of the fault condition of the at least one second physical component within a non-volatile computer-readable memory of the HUMS in response to identifying the fault condition of the at least one second physical component.

4. The method of claim 2, further comprising:
outputting, by the at least one processor of the HUMS, an indication of the fault condition of the at least one second physical component and at least a portion of the measured sensor data of the at least one second physical component in response to identifying the fault condition of the at least one physical component.

5. The method of any preceding claim,
wherein iteratively sampling with replacement the plurality of data points comprises iteratively sampling with replacement randomly-selected data points from the plurality of data points to generate the plurality of subsets of the plurality of data points.

6. The method of any preceding claim,
wherein determining, within each of the plurality of subsets, the confidence interval having the upper bound and the lower bound comprises selecting the upper bound and the lower bound of the confidence interval to achieve a threshold confidence level.

7. The method of any preceding claim,
wherein the first central tendency of the upper bounds of the plurality of confidence intervals comprises one of a median, a mean, and a mode of the plurality of upper bounds of the plurality of confidence intervals; and
wherein the second central tendency of the lower bounds of the plurality of confidence intervals comprises one of a median, a mean, and a mode of the plurality of lower bounds of the plurality of confidence intervals.

8. A system comprising:
at least one sensor (16); and
a computing device (14) comprising:
at least one processor (18); and
a computer-readable memory (26) encoded with instructions that, when executed by the at least one processor, cause the computing device to:
receive, from the at least one sensor, measured sensor data of at least one physical component having a known operational status measured during operation of the at least one physical component;
generate a plurality of data points from the measured sensor data, each of the plurality of data points representing a measured occurrence of a feature of the measured sensor data;
iteratively sample with replacement the plurality of data points to generate a plurality of subsets of the plurality of data points;
determine, within each of the plurality of subsets, a confidence interval having an upper bound and a lower bound that include a defined percentage of the respective subset of the plurality of data points to generate a plurality of confidence intervals having respective upper bounds and lower bounds; and
generate a composite confidence interval having a composite upper bound based on a first central tendency of the upper bounds of the plurality of confidence intervals and a composite lower bound based on a second central tendency of the lower bounds of the plurality of confidence intervals;
wherein the at least one sensor (16) comprises a vibration sensor;
wherein receiving the measured sensor data from the at least one sensor comprises receiving vibration data of the at least one physical component from the vibration sensor; and
wherein the feature of the measured sensor data comprises an amplitude of the vibration data; or
wherein the at least one sensor (16) comprises a structural response sensor;
wherein receiving the measured sensor data from the at least one sensor comprises receiving structural response data of the at least one physical component from the structural response sensor; and
wherein the feature of the measured sensor data comprises an amplitude of the structural response data.

9. The system of claim 8,
wherein the computer-readable memory of the computing device is further encoded with instructions that, when executed by the at least one processor, cause the computing device to iteratively sample with replacement the plurality of data points by at least causing the computing device to iteratively sample with replacement randomly-selected data points from the plurality of data points to generate the plurality of subsets of the plurality of data points; or
wherein the computer-readable memory of the computing device is further encoded with instructions that, when executed by the at least one processor, cause the computing device to determine, within each of the plurality of subsets, the confidence interval having the upper bound and the lower bound by at least causing the computing device to select the upper bound and the lower bound of the confidence interval to achieve a threshold confidence level.

10. The system of claim 8,
wherein the first central tendency of the upper bounds of the plurality of confidence intervals comprises one of a median, a mean, and a mode of the plurality of upper bounds of the plurality of confidence intervals; and
wherein the second central tendency of the lower bounds of the plurality of confidence intervals comprises one of a median, a mean, and a mode of the plurality of lower bounds of the plurality of confidence intervals.

## Patentansprüche

1. Verfahren, umfassend:
Messen von Sensordaten von zumindest einer physikalischen Komponente, die einen bekannten Betriebsstatus aufweist, während des Betriebs der zumindest einen physikalischen Komponente;
Erzeugen, durch eine Rechenvorrichtung, die zumindest einen Prozessor umfasst, einer Vielzahl von Datenpunkten aus den gemessenen Sensordaten, wobei jeder aus der Vielzahl von Datenpunkten ein gemessenes Vorkommen eines Merkmals der gemessenen Sensordaten darstellt;
iterative Probenahme mit Ersetzung, durch die Rechenvorrichtung, der Vielzahl von Datenpunkten, um eine Vielzahl von Teilsätzen der Vielzahl von Datenpunkten zu erzeugen;
Bestimmen, durch die Rechenvorrichtung innerhalb jedes aus der Vielzahl von Teilsätzen, eines Konfidenzintervalls, das eine Obergrenze und eine Untergrenze aufweist, die einen definierten Prozentsatz des jeweiligen Teilsatzes der Vielzahl von Datenpunkten beinhalten, um eine Vielzahl von Konfidenzintervallen zu erzeugen, die jeweilige Obergrenzen und Untergrenzen aufweisen; und
Erzeugen, durch die Rechenvorrichtung, eines Verbundkonfidenzintervalls, das eine Verbundobergrenze basierend auf einer ersten zentralen Tendenz der Obergrenzen der Vielzahl von Konfidenzintervallen und eine Verbunduntergrenze basierend auf einer zweiten zentralen Tendenz der Untergrenzen der Vielzahl von Konfidenzintervallen aufweist;
wobei das Messen der Sensordaten der zumindest einen physikalischen Komponente, die den bekannten Betriebsstatus aufweist, das Messen von Vibrationsdaten der zumindest einen physikalischen Komponente unter Verwendung eines oder mehrerer Vibrationssensoren umfasst; und
wobei das Merkmal der gemessenen Sensordaten eine Amplitude der Vibrationsdaten umfasst, oder
wobei das Messen der Sensordaten der zumindest einen physikalischen Komponente, die den bekannten Betriebsstatus aufweist, das Messen von Strukturreaktionsdaten der zumindest einen physikalischen Komponente unter Verwendung eines oder mehrerer Strukturreaktionssensoren umfasst; und
wobei das Merkmal der gemessenen Sensordaten eine Amplitude der Strukturreaktionsdaten umfasst.

2. Verfahren nach Anspruch 1, wobei die zumindest eine physikalische Komponente zumindest eine erste physikalische Komponente umfasst, wobei das Verfahren ferner Folgendes umfasst:
Messen, durch einen oder mehrere Sensoren, die innerhalb eines Luftfahrzeugs positioniert sind, von Sensordaten von zumindest einer zweiten physikalischen Komponente des Luftfahrzeugs, die einen ungekannten Betriebsstatus aufweist, während des Betriebs der zumindest einen zweiten physikalischen Komponente;
Identifizieren, durch zumindest einen Prozessor eines Gesundheits- und Gebrauchsverwaltungssystems, HUMS, eines Merkmals der gemessenen Sensordaten der zumindest einen zweiten physikalischen Komponente des Luftfahrzeugs; und
Identifizieren, durch den zumindest einen Prozessor des HUMS, eines Fehlerzustands der zumindest einen zweiten physikalischen Komponente als Reaktion auf das Bestimmen, dass das Merkmal der gemessenen Sensordaten der zumindest einen zweiten physikalischen Komponente nicht innerhalb des Verbundkonfidenzintervalls enthalten ist.

3. Verfahren nach Anspruch 2, ferner umfassend:
Speichern, durch den zumindest einen Prozessor des HUMS, von zumindest einem Teil der gemessenen Sensordaten der zumindest einen zweiten physikalischen Komponente innerhalb eines nichtflüchtigen computerlesbaren Speichers des HUMS als Reaktion auf das Identifizieren des Fehlerzustands der zumindest einen zweiten physikalischen Komponente; oder
Speichern, durch den zumindest einen Prozessor des HUMS, einer Angabe des Fehlerzustands der zumindest einen zweiten physikalischen Komponente innerhalb eines nichtflüchtigen computerlesbaren Speichers des HUMS als Reaktion auf das Identifizieren des Fehlerzustands der zumindest einen zweiten physikalischen Komponente.

4. Verfahren nach Anspruch 2, ferner umfassend:
Ausgeben, durch den zumindest einen Prozessor des HUMS, einer Angabe des Fehlerzustands der zumindest einen zweiten physikalischen Komponente und von zumindest einem Teil der gemessenen Sensordaten der zumindest einen zweiten physikalischen Komponente als Reaktion auf das Identifizieren des Fehlerzustands der zumindest einen physikalischen Komponente.

5. Verfahren nach einem vorhergehenden Anspruch,
wobei die iterative Probenahme mit Ersetzung der Vielzahl von Datenpunkten die iterative Probenahme mit Ersetzung von willkürlich ausgewählten Datenpunkten aus der Vielzahl von Datenpunkten umfasst, um die Vielzahl von Teilsätzen der Vielzahl von Datenpunkten zu erzeugen.

6. Verfahren nach einem vorhergehenden Anspruch,
wobei das Bestimmen, innerhalb jedes aus der Vielzahl von Teilsätzen, des Konfidenzintervalls, das die Obergrenze und die Untergrenze aufweist, das Auswählen der Obergrenze und der Untergrenze des Konfidenzintervalls umfasst, um ein Schwellenkonfidenzniveau zu erreichen.

7. Verfahren nach einem vorhergehenden Anspruch,
wobei die erste zentrale Tendenz der Obergrenzen der Vielzahl von Konfidenzintervallen eines von einem Median, einem Mittel und einem Modus der Vielzahl von Obergrenzen der Vielzahl von Konfidenzintervallen umfasst; und
wobei die zweite zentrale Tendenz der Untergrenzen der Vielzahl von Konfidenzintervallen eines von einem Median, einem Mittel und einem Modus der Vielzahl von Untergrenzen der Vielzahl von Konfidenzintervallen umfasst.

8. System, umfassend:
zumindest einen Sensor (16); und
eine Rechenvorrichtung (14), umfassend:
zumindest einen Prozessor (18); und
einen computerlesbaren Speicher (26), der mit Anweisungen codiert ist, die, wenn sie durch den zumindest einen Prozessor ausgeführt werden, die Rechenvorrichtung zu Folgendem veranlassen:
Empfangen, von dem zumindest einen Sensor, von gemessenen Sensordaten von zumindest einer physikalischen Komponente, die einen bekannten Betriebsstatus aufweist, die während des Betriebs der zumindest einen physikalischen Komponente gemessen werden;
Erzeugen einer Vielzahl von Datenpunkten aus den gemessenen Sensordaten, wobei jeder aus der Vielzahl von Datenpunkten ein gemessenes Vorkommen eines Merkmals der gemessenen Sensordaten darstellt;
iterative Probenahme mit Ersetzung der Vielzahl von Datenpunkten, um eine Vielzahl von Teilsätzen der Vielzahl von Datenpunkten zu erzeugen;
Bestimmen, innerhalb jedes aus der Vielzahl von Teilsätzen, eines Konfidenzintervalls, das eine Obergrenze und eine Untergrenze aufweist, die einen definierten Prozentsatz des jeweiligen Teilsatzes der Vielzahl von Datenpunkten beinhalten, um eine Vielzahl von Konfidenzintervallen zu erzeugen, die jeweilige Obergrenzen und Untergrenzen aufweisen; und
Erzeugen eines Verbundkonfidenzintervalls, das eine Verbundobergrenze basierend auf einer ersten zentralen Tendenz der Obergrenzen der Vielzahl von Konfidenzintervallen und eine Verbunduntergrenze basierend auf einer zweiten zentralen Tendenz der Untergrenzen der Vielzahl von Konfidenzintervallen aufweist;
wobei der zumindest eine Sensor (16) einen Vibrationssensor umfasst;
wobei das Empfangen der gemessenen Sensordaten von dem zumindest einen Sensor das Empfangen von Vibrationsdaten der zumindest einen physikalischen Komponente von dem Vibrationssensor umfasst; und
wobei das Merkmal der gemessenen Sensordaten eine Amplitude der Vibrationsdaten umfasst; oder
wobei der zumindest eine Sensor (16) einen Strukturreaktionssensor umfasst;
wobei das Empfangen der gemessenen Sensordaten von dem zumindest einen Sensor das Empfangen von Strukturreaktionsdaten der zumindest einen physikalischen Komponente von dem Strukturreaktionssensor umfasst; und
wobei das Merkmal der gemessenen Sensordaten eine Amplitude der Strukturreaktionsdaten umfasst.

9. System nach Anspruch 8,
wobei der computerlesbare Speicher der Rechenvorrichtung ferner mit Anweisungen codiert ist, die, wenn sie durch den zumindest einen Prozessor ausgeführt werden, die Rechenvorrichtung dazu veranlassen, iterativ eine Probenahme der Vielzahl von Datenpunkten mit Ersetzung durchzuführen, indem die Rechenvorrichtung zumindest dazu veranlasst wird, iterativ eine Probenahme von willkürlich ausgewählten Datenpunkten aus der Vielzahl von Datenpunkten mit Ersetzung durchzuführen, um die Vielzahl von Teilsätzen der Vielzahl von Datenpunkten zu erzeugen; oder
wobei der computerlesbare Speicher der Rechenvorrichtung ferner mit Anweisungen codiert ist, die, wenn sie durch den zumindest einen Prozessor ausgeführt werden, die Rechenvorrichtung dazu veranlassen, innerhalb jedes aus der Vielzahl von Teilsätzen das Konfidenzintervall zu bestimmen, das die Obergrenze und die Untergrenze aufweist, indem die Rechenvorrichtung zumindest dazu veranlasst wird, die Obergrenze und die Untergrenze des Konfidenzintervalls auszuwählen, um ein Schwellenkonfidenzniveau zu erreichen.

10. System nach Anspruch 8,
wobei die erste zentrale Tendenz der Obergrenzen der Vielzahl von Konfidenzintervallen eines von einem Median, einem Mittel und einem Modus der Vielzahl von Obergrenzen der Vielzahl von Konfidenzintervallen umfasst; und
wobei die zweite zentrale Tendenz der Untergrenzen der Vielzahl von Konfidenzintervallen eines von einem Median, einem Mittel und einem Modus der Vielzahl von Untergrenzen der Vielzahl von Konfidenzintervallen umfasst.

## Revendications

1. Procédé comprenant :
la mesure de données de capteur d'au moins un composant physique ayant un statut opérationnel connu pendant le fonctionnement de l'au moins un composant physique ;
la génération, par un dispositif informatique comprenant au moins un processeur, d'une pluralité de points de données à partir des données de capteur mesurées, chacun de la pluralité de points de données représentant une occurrence mesurée d'une caractéristique des données de capteur mesurées ;
l'échantillonnage itératif avec remplacement, par le dispositif informatique, de la pluralité de points de données pour générer une pluralité de sous-ensembles de la pluralité de points de données ;
la détermination, par le dispositif informatique, dans chacun de la pluralité de sous-ensembles, d'un intervalle de confiance ayant une limite supérieure et une limite inférieure incluant un pourcentage défini du sous-ensemble respectif de la pluralité de points de données afin de générer une pluralité d'intervalles de confiance ayant des limites supérieures et des limites inférieures respectives ; et
la génération, par le dispositif informatique, d'un intervalle de confiance composite ayant une limite supérieure composite basée sur une première tendance centrale des limites supérieures de la pluralité d'intervalles de confiance et une limite inférieure composite basée sur une seconde tendance centrale des limites inférieures de la pluralité d'intervalles de confiance ;
dans lequel la mesure des données de capteur de l'au moins un composant physique ayant le statut opérationnel connu comprend la mesure des données de vibration de l'au moins un composant physique à l'aide d'un ou de plusieurs capteurs de vibrations ; et
dans lequel la caractéristique des données de capteur mesurées comprend une amplitude des données de vibration, ou dans lequel la mesure des données de capteur de l'au moins un composant physique ayant le statut opérationnel connu comprend la mesure des données de réponse structurelle de l'au moins un composant physique à l'aide d'un ou de plusieurs capteurs de réponse structurelle ; et
dans lequel la caractéristique des données de capteur mesurées comprend une amplitude des données de réponse structurelle.

2. Procédé selon la revendication 1, dans lequel l'au moins un composant physique comprend au moins un premier composant physique, le procédé comprenant en outre :
la mesure, par un ou plusieurs capteurs positionnés dans un aéronef, de données de capteur d'au moins un second composant physique de l'aéronef ayant un statut opérationnel inconnu pendant le fonctionnement de l'au moins un second composant physique ;
l'identification, par au moins un processeur d'un système de gestion d'état et d'utilisation, HUMS, d'une caractéristique des données de capteur mesurées de l'au moins un second composant physique de l'aéronef ; et
l'identification, par l'au moins un processeur du HUMS, d'une condition de défaillance de l'au moins un second composant physique en réponse à la détermination du fait que la caractéristique des données de capteur mesurées de l'au moins un second composant physique n'est pas incluse dans l'intervalle de confiance composite.

3. Procédé selon la revendication 2, comprenant en outre :
le stockage, par l'au moins un processeur de l'HUMS, d'au moins une partie des données de capteur mesurées de l'au moins un second composant physique dans une mémoire non volatile et lisible par ordinateur de l'HUMS en réponse à l'identification de la condition de défaillance de l'au moins un second composant physique ; ou
le stockage, par l'au moins un processeur de l'HUMS, d'une indication de la condition de défaillance de l'au moins un second composant physique dans une mémoire non volatile et lisible par ordinateur de l'HUMS en réponse à l'identification de la condition de défaillance de l'au moins un second composant physique.

4. Procédé selon la revendication 2, comprenant en outre :
la génération, par l'au moins un processeur de l'HUMS, d'une indication de la condition de défaillance de l'au moins un second composant physique et d'au moins une partie des données de capteur mesurées de l'au moins un second composant physique en réponse à l'identification de la condition de défaillance de l'au moins un composant physique.

5. Procédé selon une quelconque revendication précédente,
dans lequel l'échantillonnage itératif avec remplacement de la pluralité de points de données comprend l'échantillonnage itératif avec remplacement de points de données sélectionnés de manière aléatoire à partir de la pluralité de points de données afin de générer la pluralité de sous-ensembles de la pluralité de points de données.

6. Procédé selon une quelconque revendication précédente,
dans lequel la détermination, dans chacun de la pluralité de sous-ensembles, de l'intervalle de confiance ayant la limite supérieure et la limite inférieure comprend la sélection de la limite supérieure et de la limite inférieure de l'intervalle de confiance pour atteindre un niveau de confiance de seuil.

7. Procédé selon une quelconque revendication précédente,
dans lequel la première tendance centrale des limites supérieures de la pluralité d'intervalles de confiance comprend l'un d'une médiane, d'une moyenne et d'un mode de la pluralité de limites supérieures de la pluralité d'intervalles de confiance ; et
dans lequel la seconde tendance centrale des limites inférieures de la pluralité d'intervalles de confiance comprend l'un d'une médiane, d'une moyenne et d'un mode de la pluralité de limites inférieures de la pluralité d'intervalles de confiance.

8. Système comprenant :
au moins un capteur (16) ; et
un dispositif informatique (14) comprenant :
au moins un processeur (18) ; et
une mémoire lisible par ordinateur (26) codée avec des instructions qui, lorsqu'elles sont exécutées par l'au moins un processeur, amènent le dispositif informatique à :
recevoir, en provenance de l'au moins un capteur, des données de capteur mesurées d'au moins un composant physique ayant un statut opérationnel connu mesuré pendant le fonctionnement de l'au moins un composant physique ;
générer une pluralité de points de données à partir des données de capteur mesurées, chacun de la pluralité de points de données représentant une occurrence mesurée d'une caractéristique des données de capteur mesurées ;
échantillonner de manière itérative avec remplacement la pluralité de points de données pour générer une pluralité de sous-ensembles de la pluralité de points de données ;
déterminer, dans chacun de la pluralité de sous-ensembles, un intervalle de confiance ayant une limite supérieure et une limite inférieure incluant un pourcentage défini du sous-ensemble respectif de la pluralité de points de données afin de générer une pluralité d'intervalles de confiance ayant des limites supérieures et des limites inférieures respectives ; et
générer un intervalle de confiance composite ayant une limite supérieure composite basée sur une première tendance centrale des limites supérieures de la pluralité d'intervalles de confiance et une limite inférieure composite basée sur une seconde tendance centrale des limites inférieures de la pluralité d'intervalles de confiance ;
dans lequel l'au moins un capteur (16) comprend un capteur de vibrations ;
dans lequel la réception des données de capteur mesurées en provenance de l'au moins un capteur comprend la réception de données de vibration de l'au moins un composant physique en provenance du capteur de vibrations ;
dans lequel la caractéristique des données de capteur mesurées comprend une amplitude des données de vibration ; ou
dans lequel l'au moins un capteur (16) comprend un capteur de réponse structurelle ;
dans lequel la réception des données de capteur mesurées en provenance de l'au moins un capteur comprend la réception de données de réponse structurelle de l'au moins un composant physique en provenance du capteur de réponse structurelle ; et
dans lequel la caractéristique des données de capteur mesurées comprend une amplitude des données de réponse structurelle.

9. Système selon la revendication 8,
dans lequel la mémoire lisible par ordinateur du dispositif informatique est en outre codée avec des instructions qui, lorsqu'elles sont exécutées par l'au moins un processeur, amènent le dispositif informatique à échantillonner de manière itérative avec remplacement la pluralité de points de données au moins en amenant le dispositif informatique à échantillonner de manière itérative avec remplacement les points de données sélectionnés de manière aléatoire à partir de la pluralité de points de données afin de générer la pluralité de sous-ensembles de la pluralité de points de données ; ou
dans lequel la mémoire lisible par ordinateur du dispositif informatique est en outre codée avec des instructions qui, lorsqu'elles sont exécutées par l'au moins un processeur, amènent le dispositif informatique à déterminer, dans chacun de la pluralité de sous-ensembles, l'intervalle de confiance ayant la limite supérieure et la limite inférieure au moins en amenant le dispositif informatique à sélectionner la limite supérieure et la limite inférieure de l'intervalle de confiance pour atteindre un niveau de confiance de seuil.

10. Système selon la revendication 8,
dans lequel la première tendance centrale des limites supérieures de la pluralité d'intervalles de confiance comprend l'un d'une médiane, d'une moyenne et d'un mode de la pluralité de limites supérieures de la pluralité d'intervalles de confiance ; et
dans lequel la seconde tendance centrale des limites inférieures de la pluralité d'intervalles de confiance comprend l'un d'une médiane, d'une moyenne et d'un mode de la pluralité de limites inférieures de la pluralité d'intervalles de confiance.
